# FASCICULE DE BREVET EUROPEEN

(11) **EP 1 310 397 B1**
(45) Date de publication et mention de la délivrance du brevet: **13.12.2006**
(21) Numéro de dépôt: 02292514.3
(22) Date de dépôt: 11.10.2002
(51) Int. Cl.: B60J 7/16

(54) **Toit escamotable de véhicule automobile**
Absenkbares Fahrzeugdach
Motor vehicle retractable roof

(30) Priorité: 13.11.2001 FR 0114671
(43) Date de publication de la demande: 14.05.2003
(73) Titulaire: Peugeot Citroen Automobiles SA, 92200 Neuilly sur Seine (FR)
(72) Inventeur: Rames, Christian, 78700 Conflans Sainte Honorine (FR)
(74) Mandataire: Lanceplaine, Jean-Claude

(56) Documents cités:
- EP-B- 0 261 379
- DE-A- 4 324 708

## Description

La présente invention concerne un toit escamotable de véhicule automobile.

On connaît des véhicules automobiles, de type cabriolet, dont la partie arrière de l'habitacle est délimitée par les dossiers de la rangée de sièges et par une paroi transversale arrière.

Pour ce genre de véhicule, il est nécessaire de concevoir des toits escamotables, souples et/ou rigides, permettant de découvrir l'habitacle du véhicule.

A cet effet, on connaît par le document EP-A-0 261 379 un toit escamotable comportant un pavillon rigide déplaçable entre une position sensiblement horizontale de fermeture de l'habitacle et une position sensiblement verticale escamotée dans l'habitacle contre ladite paroi arrière.

Pour cela, le pavillon est fixé à la carrosserie du véhicule par l'intermédiaire d'un ensemble de bras articulés qui comprend deux bras articulés de soutien s'étendant parallèlement au plan médian longitudinal du véhicule, dont les extrémités supérieures sont articulées à la partie arrière du pavillon, et qui comprend également un bras articulé de guidage s'étendant parallèlement à la ligne d'inclinaison de la vitre arrière. Ce bras de guidage est articulé au toit au-dessus de la vitre arrière et à la carrosserie du véhicule au-dessous de ladite vitre arrière.

Mais, ce genre de toit escamotable présente une cinématique complexe et nécessite un nombre de pièces de liaison et de support important ce qui augmente son poids et le coût d'un tel toit.

L'invention a pour but de proposer un toit escamotable pouvant être actionné manuellement ou automatiquement, qui évite les inconvénients précédemment mentionnés et qui présente un nombre de pièces réduit, tout en ayant une cinématique simple et en respectant les problèmes d'étanchéité liés au pavillon.

L'invention a donc pour objet un toit escamotable de véhicule automobile, du type comprenant un pavillon rigide déplaçable entre une position sensiblement horizontale de fermeture de l'habitacle du véhicule et une position sensiblement verticale escamotée dans l'habitacle contre une paroi arrière de cet habitacle, caractérisé en ce que ledit pavillon comporte des moyens de déplacement et de guidage entre :
- une première position sensiblement horizontale surélevée s'étendant parallèlement à la position de fermeture,
- une deuxième position sensiblement verticale s'étendant en dehors de l'habitacle,
- une troisième position sensiblement verticale à l'intérieur de l'habitacle, et
- la position escamotée contre ladite paroi arrière de l'habitacle.

Suivant d'autres caractéristiques de l'invention :
- les moyens de déplacement et de guidage du pavillon entre lesdites positions comprennent au moins un ensemble formé par un rail disposé dans l'habitacle et comportant une partie supérieure sensiblement verticale et une partie inférieure recourbée dirigée vers l'arrière du véhicule, une pièce de liaison comportant à l'une de ses extrémités un chariot déplaçable sur ledit rail et à l'autre desdites extrémités un axe d'articulation horizontal monté à l'arrière du pavillon et un organe de basculement de ce pavillon entre les positions sensiblement horizontale et sensiblement verticale, supporté par la pièce de liaison,
- les moyens de déplacement et de guidage du pavillon comprennent deux ensembles formés chacun par un rail, une pièce de liaison et un organe de basculement,
- la pièce de liaison a la forme d'un col de cygne dont la partie recourbée est dirigée vers le haut et supporte ledit axe d'articulation,
- le chariot comporte deux séries parallèles de galets destinés à coopérer avec le rail, des galets de chaque série ayant un axe de rotation perpendiculaire à l'axe longitudinal du véhicule et les autres galets de chaque série ayant un axe de rotation parallèle audit axe longitudinal,
- l'organe de commande est formé par au moins un vérin.

Les caractéristiques et avantages de l'invention apparaîtront au cours de la description qui va suivre, donnée à titre d'exemple, et faite en référence aux dessins annexés, sur lesquels :
- la Fig. 1 est une vue schématique en coupe longitudinale partielle d'un véhicule automobile de type cabriolet équipé d'un toit escamotable conforme à l'invention,
- la Fig. 2 est une vue schématique en perspective des moyens de déplacement et de guidage du toit escamotable conforme à l'invention,
- la Fig. 3 est une vue schématique en perspective de la pièce de liaison du toit escamotable conforme à l'invention,
- les Figs. 4 à 8 sont des vues schématiques en coupe longitudinale partielle similaire à la Fig. 1 et illustrant plusieurs positions relatives du toit escamotable.

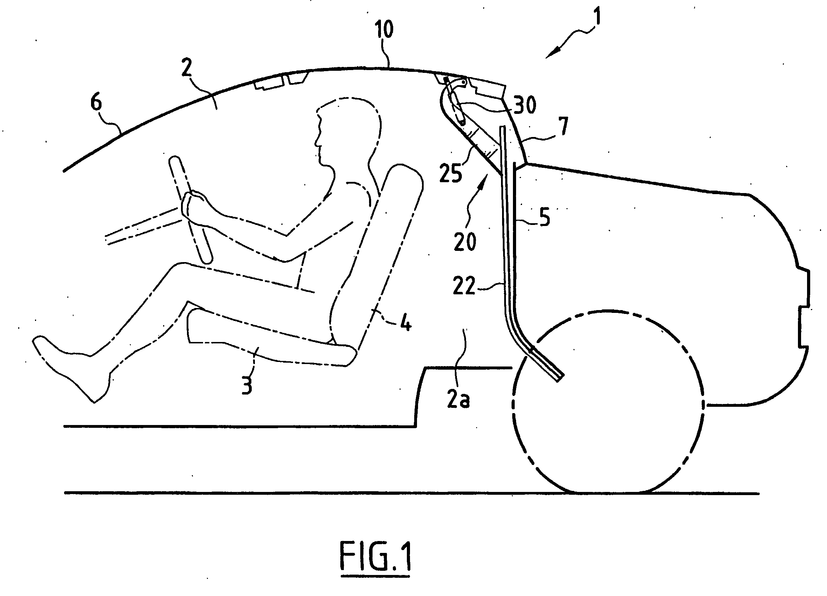

Sur la Fig. 1, on a représenté schématiquement une partie d'un véhicule automobile, de type cabriolet, désigné dans son ensemble par la référence 1 et qui comporte un habitacle 2 équipé de deux sièges comprenant chacun une assise 3 et un dossier 4.

L'habitacle 2 comporte une partie arrière 2a qui est délimitée longitudinalement, d'une part, par la face arrière des dossiers 4 et, d'autre part, par une paroi transversale arrière 5.

L'habitacle 2 est délimité par différents éléments de carrosserie et de structure du véhicule et également, à sa partie avant, par un pare-brise 6 et, à sa partie arrière, par une lunette 7.

Enfin, l'habitacle 2 comporte, à sa partie supérieure, un toit escamotable comprenant un pavillon rigide 10.

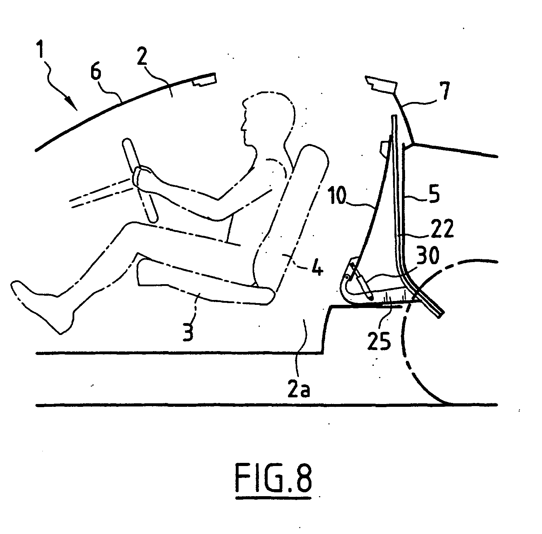

Le pavillon 10 comporte des moyens désignés par la référence générale 20 de déplacement et de guidage de ce pavillon 10 entre une position sensiblement horizontale de fermeture de l'habitacle 2, ainsi que représentée à la Fig. 1, et une position sensiblement verticale escamotée dans cet habitacle 2 contre la paroi arrière 5, ainsi que représentée à la Fig. 8.

Pour cela, les moyens 20 de déplacement et de guidage du pavillon 10 comprennent au moins un ensemble 21 et de préférence deux ensembles 21 identiques et s'étendant parallèlement l'un par rapport à l'autre.

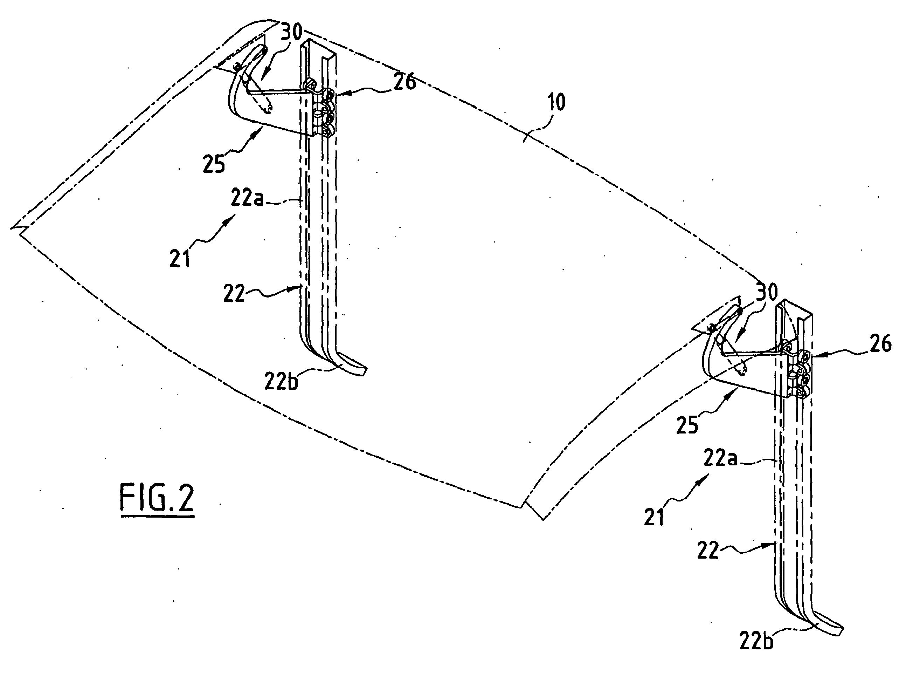

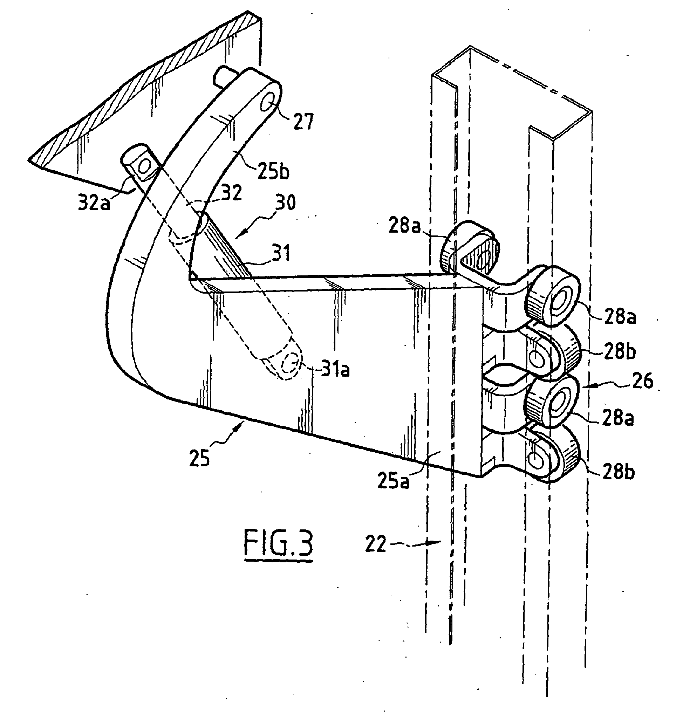

En se reportant maintenant aux Figs. 2 et 3, on va décrire un ensemble 21.

Cet ensemble 21 se compose tout d'abord d'un rail 22 disposé dans l'habitacle 2 contre la paroi arrière 5 et qui comporte une partie supérieure 22a sensiblement verticale et une partie inférieure 22b recourbée et dirigée vers l'arrière du véhicule.

Ce rail 22 est formé par un profilé comportant une partie ouverte s'étendant sur toute la longueur de ce rail 22 et dirigée vers l'avant du véhicule.

L'ensemble 21 comporte également une pièce de liaison 25 se présentant sous la forme d'un col de cygne dont la partie recourbée est dirigée vers le haut, ainsi que représenté sur les Figs. 2 et 3.

Cette pièce de liaison 25 comporte à l'une 25a de ses extrémités, un chariot 26 déplaçable sur le rail 22 et à l'autre 25b desdites extrémités, un axe d'articulation 27 horizontal monté à l'arrière du pavillon 10.

Le chariot 26 comporte deux séries parallèles de galets 28a et 28b destinés à coopérer avec le rail 22 correspondant.

Les galets 28a de chaque série de galets ont un axe de rotation perpendiculaire à l'axe longitudinal du véhicule pour empêcher le déplacement de la pièce de liaison 25 et du pavillon 10 dans cette direction et les galets 28b de chaque série ont un axe de rotation parallèle à l'axe longitudinal de ce véhicule pour empêcher le déplacement de la pièce de liaison 25 et du pavillon 10 dans cette direction.

De préférence, des galets 28a et 28b sont alternés.

Enfin, l'ensemble 21 comporte un organe 30 de basculement du pavillon 10 entre les positions sensiblement horizontale et sensiblement verticale, comme on le verra ultérieurement.

Cet organe de basculement 30 est supporté par la pièce de liaison 25 correspondante et est formé de préférence par un vérin comportant un corps 31 et une tige de commande 32.

L'extrémité libre 31a du corps 31 est montée articulée sur la pièce de liaison 25 et l'extrémité libre 32a de la tige de commande 32 est montée articulée sur le pavillon 10.

Par exemple, le pavillon 10 est en matériau composite et comporte des ridelles de rigidification qui forment un seul élément avec ledit pavillon.

L'ouverture de l'habitacle 2 du véhicule automobile est réalisée de la façon suivante.

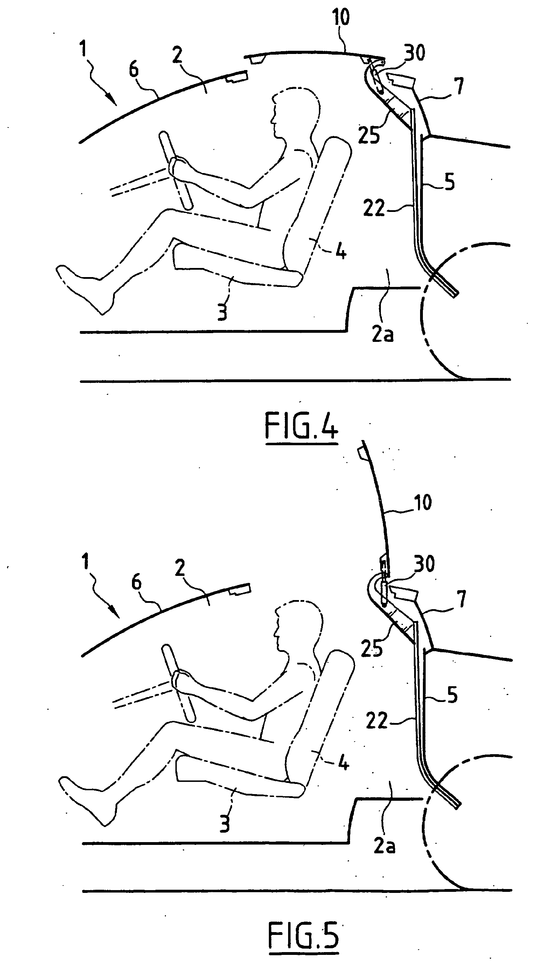

Tout d'abord, les chariots 26 des pièces de liaison 25 se déplacent vers le haut sur les rails 22 afin de libérer le pavillon 10 de la structure du véhicule et de fournir l'espace utile à la rotation de ce pavillon 10, ainsi que représenté à la Fig. 4.

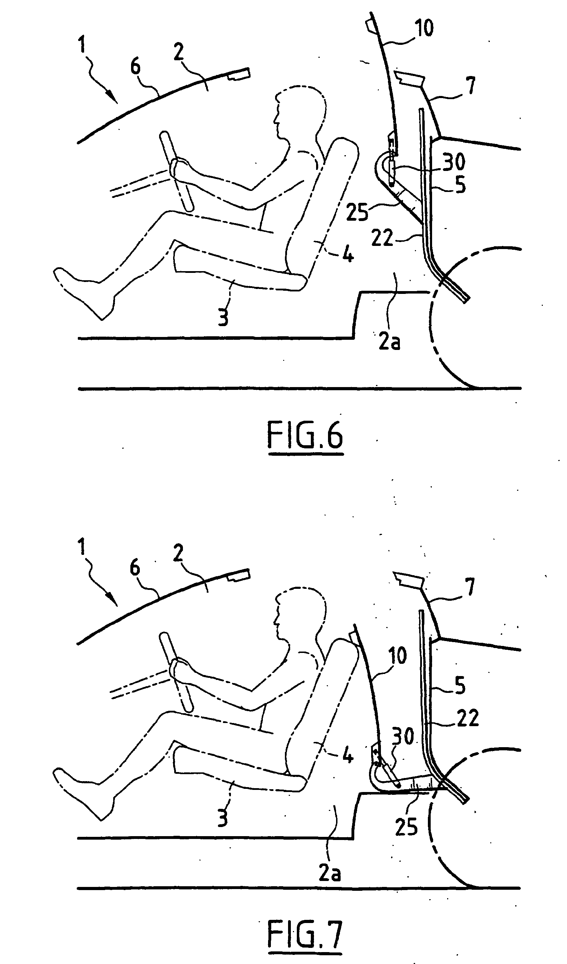

Ensuite, les organes 30 de basculement sont actionnés de telle manière que la tige de commande 32 de chaque organe de basculement 30 exerce une poussée sur le pavillon 10 de façon à faire pivoter ce pavillon 10 autour de l'axe d'articulation 27 de chaque pièce de liaison 25 pour basculer le pavillon 10 dans une position sensiblement verticale s'étendant en dehors de l'habitacle 2, comme représentée à la Fig. 5.

Après ce basculement, chaque chariot 26 se déplace vers le bas du rail 22 correspondant ce qui entraîne dans l'habitacle 2 les pièces de liaison 25 ainsi que le pavillon 10, comme représenté à la Fig. 6.

La géométrie de chaque rail 22 permet d'amener chaque pièce de liaison 25 dans une position située contre le plancher du véhicule et de placer le pavillon 10 derrière les dossiers 4 de la rangée de sièges, ainsi que montré à la Fig. 7.

Pour réduire l'encombrement du pavillon 10 à l'intérieur de l'habitacle 2, les organes de basculement 30 sont de nouveau actionnés de façon à faire pivoter le pavillon 10 autour de l'axe d'articulation 27 et amener ce pavillon 10 contre la paroi arrière 5 de la l'habitacle 2 afin de libérer le maximum de place à l'intérieur dudit habitacle 2, comme montré à la Fig. 8.

Le premier mouvement de translation vers le haut du pavillon 10 lors du début de la phase d'ouverture permet de désolidariser ce pavillon 10 des joints d'étanchéité.

Les mouvements de translation vers le haut et vers le bas du pavillon 10 peuvent être assurés de façon manuelle ou par tout dispositif d'actionnement motorisé de façon à automatiser le déplacement du pavillon 10 entre les différentes positions.

La cinématique de déplacement du pavillon 10 présente l'avantage d'être simple et de résoudre les problèmes d'étanchéité qui se posent avec un toit escamotable. Le nombre de pièces pour assurer le déplacement du pavillon entre sa position de fermeture de l'habitacle et sa position escamotée est simple ce qui permet de réduire le prix de revient d'un tel toit escamotable.

## Revendications

1. Toit escamotable de véhicule automobile, du type comprenant un pavillon (10) rigide déplaçable entre une position sensiblement horizontale de fermeture de l'habitacle (2) du véhicule et une position sensiblement verticale escamotée dans l'habitacle (2) contre une paroi arrière (5) de cet habitacle (2),
**caractérisé en ce que** ledit pavillon (10) comporte des moyens (20) de déplacement et de guidage entre :
- une première position sensiblement horizontale surélevée s'étendant parallèlement à la position de fermeture,
- une deuxième position sensiblement verticale s'étendant en dehors de l'habitacle (2),
- une troisième position sensiblement verticale à l'intérieur de l'habitacle (2), et
- la position escamotée contre la paroi arrière (5) de l'habitacle (2).

2. Toit escamotable selon la revendication 1, **caractérisé en ce que** les moyens (20) de déplacement et de guidage du pavillon (10) entre lesdites positions comprennent au moins un ensemble (21) formé par un rail (22) disposé dans l'habitacle (2) et comportant une partie supérieure (22a) sensiblement verticale et une partie inférieure (22b) recourbée, dirigée vers l'arrière du véhicule, une pièce de liaison (25) comportant à l'une (25a) de ses extrémités, un chariot (26) déplaçable sur ledit rail (22) et à l'autre (25b) desdites extrémités, un axe d'articulation (27) horizontal monté à l'arrière du pavillon (10) et un organe de basculement (30) de ce pavillon (10) entre les positions sensiblement horizontale et sensiblement verticale, supporté par la pièce de liaison (25).

3. Toit escamotable selon la revendication 1 ou 2, **caractérisé en ce que** les moyens (20) de déplacement et de guidage du pavillon (10) comprennent deux ensembles (21) formés chacun par un rail (22), une pièce de liaison (25) et un organe de basculement (30).

4. Toit escamotable selon la revendication 2 ou 3, **caractérisé en ce que** la pièce de liaison (25) a la forme d'un col de cygne dont la partie recourbée est dirigée vers le haut et supporte ledit axe d'articulation (27).

5. Toit escamotable selon l'une quelconque des revendications 2 à 4, **caractérisé en ce que** le chariot (26) comporte deux séries parallèles de galets (28a, 28b) destinés à coopérer avec le rail (22), des galets (28a) de chaque série ayant un axe de rotation perpendiculaire à l'axe longitudinal du véhicule et les autres galets (28b) de chaque série ayant un axe de rotation parallèle audit axe longitudinal.

6. Toit escamotable selon l'une quelconque des revendications 2 à 5, **caractérisé en ce que** l'organe de basculement (30) est formé par au moins un vérin.

## Claims

1. Retractable roof for a motor vehicle, of the type comprising a rigid roof (10) which is movable between a substantially horizontal closed position of the interior (2) of the vehicle and a substantially vertical position retracted into the interior (2) against a rear wall (5) of this interior (2), **characterised in that** the roof (10) comprises means (20) for moving and guiding it between:
- a raised, substantially horizontal first position extending parallel to the closed position,
- a substantially vertical second position extending outside the interior (2),
- a substantially vertical third position inside the interior (2), and
- the retracted position against the rear wall (5) of the interior (2).

2. Retractable roof according to claim 1, **characterised in that** the means (20) for moving and guiding the roof (10) between said positions comprise at least one assembly (21) formed by a rail (22) disposed in the interior (2) and comprising a substantially vertical upper part (22a) and a curved lower part (22b), directed towards the rear of the vehicle, a connecting member (25) comprising, at one (25a) of its ends, a carriage (26) which is movable along said rail (22) and at the other (25b) of its ends a horizontal articulation spindle (27) mounted at the rear of the roof (10) and means (30) for pivoting this roof (10) between the substantially horizontal and substantially vertical positions, supported by the connecting member (25).

3. Retractable roof according to claim 1 or 2, **characterised in that** the means (20) for moving and guiding the roof (10) comprise two assemblies (21), each formed by a rail (22), a connecting member (25) and pivoting means (30).

4. Retractable roof according to claim 2 or 3, **characterised in that** the connecting member (25) is shaped like a swan neck, the curved part of which is directed upwards and supports said articulation spindle (27).

5. Retractable roof according to any one of claims 2 to 4, **characterised in that** the carriage (26) comprises two parallel series of rollers (28a; 28b) adapted to cooperate with the rail (22), the rollers (28a) of each series having a rotation axis perpendicular to the longitudinal axis of the vehicle and the other rollers (28b) of each series having a rotation axis parallel to said longitudinal axis.

6. Retractable roof according to any one of claims 2 to 5, **characterised in that** the pivoting means (30) are formed by at least one jack,

## Patentansprüche

1. Versenkbares Kraftfahrzeugdach, umfassend ein starres Dachelement (10), das zwischen einer im Wesentlichen horizontalen Stellung zum Verschließen des Karosseriegehäuses (2) des Fahrzeugs und einer im Wesentlichen vertikalen, in das Karosseriegehäuse (2) an einer Rückwand (5) dieses Karosseriegehäuses (2) versenkten Stellung beweglich ist, **dadurch gekennzeichnet, dass** das Dachelement (10) Mittel (20) zu seiner Bewegung und Führung umfasst zwischen
- einer ersten im Wesentlichen horizontalen, angehobenen Stellung, die sich parallel zur Schließstellung erstreckt,
- einer zweiten im Wesentlichen vertikalen Stellung, die sich außerhalb des Karosseriegehäuses (2) erstreckt,
- einer dritten, im Wesentlichen vertikalen Stellung im Inneren des Karosseriegehäuses (2) und
- der an der Rückwand (5) des Karosseriegehäuses (2) versenkten Stellung.

2. Versenkbares Dach nach Anspruch 1, **dadurch gekennzeichnet, dass** die Mittel (20) zur Bewegung und Führung des Dachelements (10) zwischen diesen Stellungen mindestens eine Einheit (21) umfassen, die gebildet ist von einer in dem Karosseriegehäuse (2) angeordneten Schiene (22), die einen im Wesentlichen vertikalen oberen Teil (22a) und einen gekrümmten unteren Teil (22b) umfasst, der auf das Fahrzeugheck zu gerichtet ist, einem Verbindungsteil (25), das an einem (25a) seiner Enden einen auf dieser Schiene (22) beweglichen Wagen (26) und an dem anderen (25b) dieser Enden eine am hinteren Ende des Dachelements (10) montierte, horizontale Gelenkachse (27) umfasst, und einem von dem Verbindungsteil (25) getragenen Organ (30) zum Verschwenken des Dachelements (10) zwischen der im Wesentlichen horizontalen und der im Wesentlichen vertikalen Stellung.

3. Versenkbares Dach nach Anspruch 1 oder 2, **dadurch gekennzeichnet, dass** die Mittel (20) zur Bewegung und Führung des Dachelements (10) zwei Einheiten (21) umfassen, die von einer Schiene (22), einem Verbindungsteil (25) und einem Schwenkorgan (30) gebildet sind.

4. Versenkbares Dach nach Anspruch 2 oder 3, **dadurch gekennzeichnet, dass** das Verbindungsteil (25) die Form eines Schwanenhalses hat, dessen gekrümmter Teil nach oben gerichtet ist und die Gelenkachse (27) trägt.

5. Versenkbares Dach nach einem der Ansprüche 2 bis 4, **dadurch gekennzeichnet, dass** der Wagen (26) zwei parallele Reihen von Rollen (28a, 28b) umfasst, die dazu bestimmt sind, mit der Schiene (22) zusammenzuwirken, wobei Rollen (28a) jeder Reihe eine zur Längsachse des Fahrzeugs senkrechte Drehachse und die anderen Rollen (28b) jeder Reihe eine zu dieser Längsachse parallele Drehachse aufweisen.

6. Versenkbares Dach nach einem der Ansprüche 2 bis 5, **dadurch gekennzeichnet, dass** das Schwenkorgan (30) von mindestens einer Kolbenzylindereinheit gebildet ist.
